Europäisches Patentamt

European Patent Office

Office européen des brevets

(11) Publication number: **0 084 231**
**B1**

# EUROPEAN PATENT SPECIFICATION

(45) Date of publication of patent specification: **27.08.86**

(51) Int. Cl.⁴: **G 01 F 1/32**

(21) Application number: **82306579.2**

(22) Date of filing: **09.12.82**

(54) Vortex shedding flowmeter circuit arrangements.

(30) Priority: **10.12.81 US 329531**

(43) Date of publication of application:
**27.07.83 Bulletin 83/30**

(45) Publication of the grant of the patent:
**27.08.86 Bulletin 86/35**

(84) Designated Contracting States:
**DE FR GB IT**

(56) References cited:
**DE-A-2 632 553**
**GB-A-1 566 790**
**GB-A-1 583 490**
**GB-A-2 008 752**
**US-A-4 134 297**

**U. TIETZE, CH. SCHENK "Halbleiter-
Schaltungstechnik", 5. Auflage, 1980
SPRINGER-VERLAG, Berlin, Heidelberg, New
York pages 9-13, 191, 192, 491-494**

**The file contains technical information
submitted after the application was filed and
not included in this specification**

(73) Proprietor: **THE BABCOCK & WILCOX
COMPANY**
**1010 Common Street P.O. Box 60035
New Orleans Louisiana 70160 (US)**

(72) Inventor: **Thompson, William L.**
**15364 GAR Highway
Chardon Ohio (US)**

(74) Representative: **Cotter, Ivan John et al
D. YOUNG & CO. 10 Staple Inn
London WC1V 7RD (GB)**

Courier Press, Leamington Spa, England.

## Description

This invention relates to vortex shedding flowmeter circuit arrangements.

Vortex shedding flowmeters are known. In such flowmeters, an obstruction or bluff body is positioned in a fluid flow. Vortices are generated at alternate sides of the obstruction with a frequency which is proportional to the volumetric flow rate. The passage of the vortices is counted to provide a signal which indicates the flow rate. Such a flowmeter is disclosed for example in US Patent No. US—A—4 094 194 (Herzl).

It is also known to use a two wire transmission line for supplying power to and receiving a signal from a vortex shedding flowmeter. Such a transmission line arrangement is disclosed for example in US Patents Nos. US—A—4 123 940 (Herzl et al) and US—A—4 134 297 (Herzl).

UK Patent Specification No. GB—A—1 583 490 discloses a vortex shedding flowmeter circuit arrangement (hereinafter referred to as "a vortex shedding flowmeter circuit arrangement of the type described") comprising: a vortex sensor for generating a vortex shedding frequency signal; pulse means connected to the vortex sensor for generating a fixed width pulse signal with a frequency equal to the frequency of the vortex shedding frequency signal; a low pass filter connected to the pulse means for receiving the fixed width pulse signal and operative to generate an analog signal which is proportional in level to the frequency of the vortex shedding frequency signal; and an output stage connected to the low pass filter for receiving the analog signal, the output stage including an amplifier having a non-inverting input and an inverting input, and feedback means connected between the output of the amplifier and one of the inputs, the other input being connected to receive the analog signal. The fixed width pulse signal is supplied to an electronic measuring device and the analog signal is supplied to an electronic analog measuring system. The measuring device and analog measuring system are not described. Neither is the technique used for transmitting the signals to the measuring device and measuring system. The output stage is used as a servo system to directly drive an indicator to indicate a flow velocity corresponding to the amplitude of the analog signal. Apparently, though this is shown only in the drawings, the feedback means is connected to the indicator and is responsive to the position of the indicator to adjust the amplifier output so as to cause the indicator to display a desired reading.

In one embodiment shown in GB—A—1583490, feedback means are connected between the output of a transistor circuit and the inverting input of the amplifier, the input of the transistor circuit being fed by the output of said amplifier.

An object of the present invention is to provide a vortex shedding flowmeter circuit arrangement of the type described in which both the analog and pulse signals can be transmitted via a two wire transmission line.

The present invention provides a vortex shedding flowmeter circuit arrangement of the type described, characterised in that means is provided to enable one of the fixed width pulse signal and the analog signal to be supplied selectively to the non-inverting input of the amplifier; a two wire transmission line is connected to be driven by the output of the output stage; power supply means is connected to the two wire transmission line; and the feedback means is operative to adjust the amplifier output to equal the current sensed in the two wire transmission line.

In this way, both the analog and digital signal can be supplied to a two-wire transmission line and the amplifier output can be adjusted to equal the current sensed in the two-wire transmission line.

A preferred embodiment of the present invention described hereinbelow provides a circuit arrangement for processing a vortex shedding flowmeter signal which produces output signals that are directly compatible with digital control systems. The preferred circuit arrangement generates both an analog and a pulse signal, both of which are proportional to the frequency of the vortex shedding frequency signal. The vortex shedding frequency signal is preamplified and supplied to a one-shot for producing pulses, which pulses are processed through a low pass filter to produce the analog signal which is proportional to the vortex shedding frequency. The pulse signal is tapped directly from the one-shot to produce a pulse frequency signal having a frequency proportional to the vortex shedding frequency. Both the analog and pulse signals typically have a 4 to 20 mA output, which is compatible with known two wire transmission systems for vortex shedding flowmeters. The preferred circuit arrangement includes a range selection circuit for receiving the pulse signal to scale or change the range of measurement of the vortex shedding flowmeter. The preferred circuit arrangement is simple in design and economical to manufacture.

The invention will now be further described, by way of illustrative and non-limiting example, with reference to the accompanying drawings, in which:

Figure 1 is a block diagram of an analog and pulse vortex shedding flowmeter circuit arrangement embodying the invention;

Figure 2 is a schematic representation of an output stage for receiving an analog and a pulse signal from the circuit arrangement of Figure 1;

Figure 3 is a schematic representation of a low pass filter that can be used in the circuit arrangement of Figure 1;

Figure 4 is a schematic representation of a pulse signal network that can be used in the circuit arrangement of Figure 1; and

Figure 5 is a block diagram of a pulse frequency range selection circuit which can be connected between the pulse signal network of Figure 4 and the output stage of Figure 2.

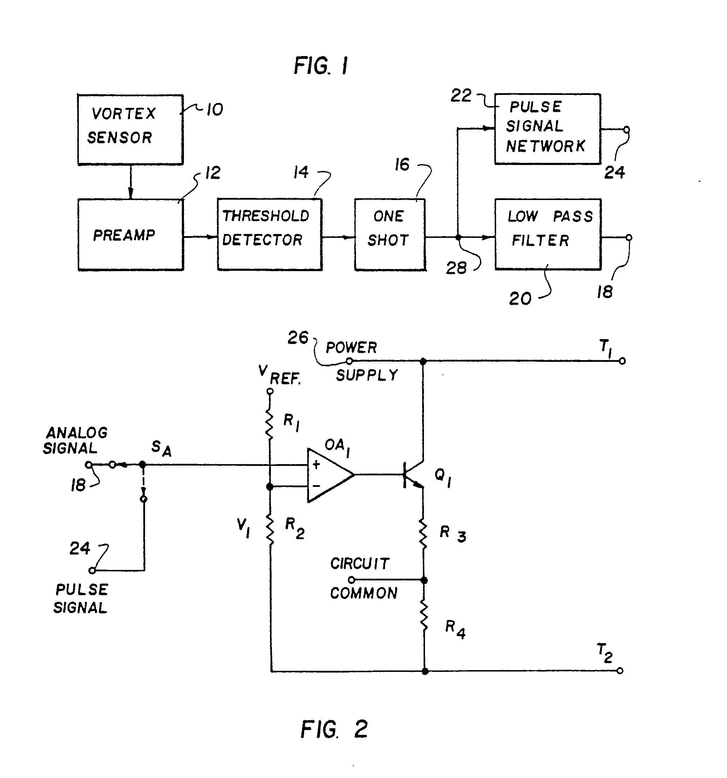

Figure 1 of the drawings shows a vortex shedding flowmeter circuit arrangement having a vortex sensor 10 which generates an output in the form of a vortex shedding frequency signal that has a frequency corresponding to the vortex shedding frequency of a vortex shedding flowmeter. The output of the vortex sensor 10 is supplied over a preamplifier 12 to a threshold detector 14. An output of the threshold detector 14 is supplied to a one-shot (monostable multivibrator) 16 which generates a fixed width pulse for each cycle of the vortex frequency. An output of the one-shot 16 is supplied to a low pass filter 20 for generating an analog signal at a terminal 18, and to a pulse signal network 22 which generates a pulse signal at a terminal 24.

The low pass filter 20 converts the fixed width pulses coming from the one-shot 16 into an analog level corresponding to the rate of pulses. This thus corresponds to the vortex shedding frequency.

Figure 2 shows an output stage which can be connected to the pulse signal terminal 24 and the analog signal terminal 18. The analog and pulse signals can be selected by a switch $S_A$ to apply either one or both of the signals to a non-inverting (positive) input of an operational amplifier $OA_1$.

The output stage of Figure 2 controls the current in two lines attached to terminals $T_1$ and $T_2$. These lines contain a power supply designated 26 and current sensor means (not shown) at an opposite end of transmission lines connected to the terminals $T_1$ and $T_2$.

A transistor $Q_1$ and resistors $R_3$, $R_4$ are connected as shown between the terminals $T_1$ and $T_2$. The resistor $R_4$ senses the current flowing between the terminals $T_1$ and $T_2$ and develops a voltage proportional to that current. Resistors $R_1$ and $R_2$ feed back a fraction of this voltage to the non-inverting (negative) input of the amplifier $OA_1$. The amplifier $OA_1$ compares the input signal and the feedback signal and adjusts the loop including its own gain and the transistor $Q_1$ so that the two voltages are made equal. This action renders the output current proportional to the input signal of this circuit stage. The input signal is either an analog level, yielding a 4 to 20 mA output signal, or a pulse signal, yielding a pulsed output traversing the range of 4 to 20 mA, equalling approximately 4 mA with the pulse off and approximately 20 mA with the pulse on. These two inputs, analog or pulse, are selected typically by the switch $S_A$ or by the movement of a plug cable jumper.

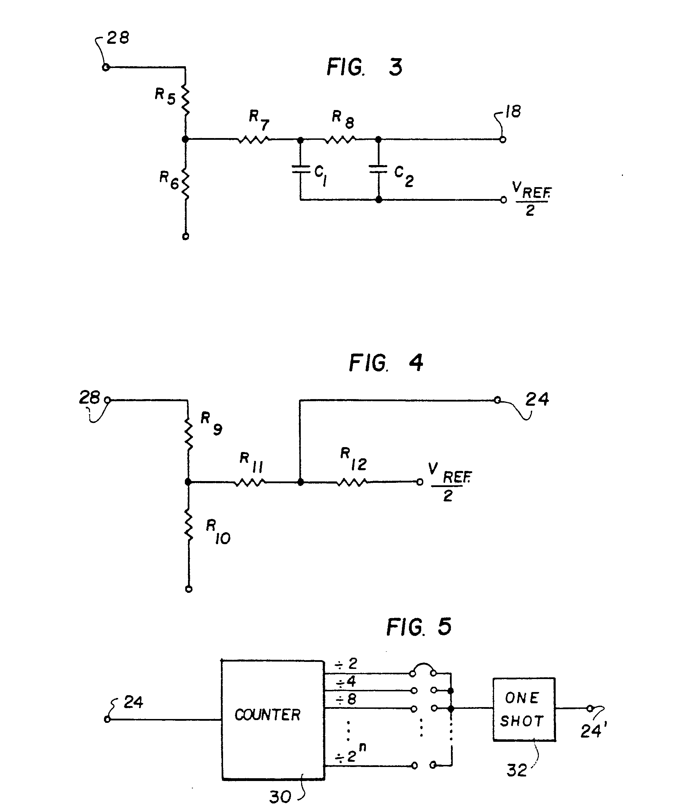

Figure 3 shows an embodiment of the low pass filter 20 of Figure 1. The low pass filter 20 is used to smooth or average the fixed width pulses from the one-shot 16. A filtering action is effected by resistance and capacitor combinations $R_7$, $C_1$ and $R_8$, $C_2$. In the output stage of Figure 2, the voltage at the non-inverting input of the amplifier $OA_1$ may not be a circuit common. In this instance, the voltage $V_1$ across the resistor $R_2$ in Figure 2 will appear across the capacitors $C_1$ and $C_2$ in the low pass filter 20. Since these units typically have large values of capacitance and have leakage associated with them, they should have no *dc*

voltage across them to encourage leakage. This leakage has severe effects on the accuracy of the signal for the 4 to 20 mA arrangement. For optimum sensitivity, $V_1$ is equal to one half of a reference voltage $V_{REF}$ (Figure 2). Thus, the capacitors $C_1$ and $C_2$ are returned to a value of $V_{REF}/2$ (Figure 3). Resistors $R_5$ and $R_6$ are selected so that the voltage at their junction equals one half the reference voltage when the one-shot 16 is off. A minimum of voltage is thus provided at the capacitors $C_1$ and $C_2$ to minimise leakage problems.

Figure 4 is a schematic representation of an embodiment of pulse signal network 22 of Figure 1. The network 22 generates a pulsed frequency signal base level and amplitude. Resistors $R_9$ and $R_{10}$ form a voltage $V_{REF}/2$ at their junction in a similar manner to the resistors $R_5$ and $R_6$ in Figure 3. The circuit of Figure 4 can actually be incorporated into the circuit of Figure 3, utilising the resistors $R_5$ and $R_6$.

Resistors $R_{11}$ and $R_{12}$ select a fraction of the excursion of the pulse voltage at the junction between the resistors $R_9$ and $R_{10}$ and present it to the output stage at levels (pulse off and pulse on) to yield pulses between 4 mA (off) and 20 mA (on) in the output circuit.

Scaling or range selection can be achieved using a circuit shown in Figure 5. This circuit contains a counter 30 which divides the vortex shedding frequency by a factor of $2^n$, where $n$ equals 1 to a maximum desired in the circuit. More specifically, as shown, the counter 30 may be arranged to divide the vortex shedding frequency by any one of a variety of factors $2^n$, each having a different value of $n$. A following one-shot 32 generates a narrow pulse for the output, although it would instead be possible to transmit a 50% duty cycle waveform. The circuit of Figure 5 is typically used between those of Figures 2 and 4.

In Figures 3 and 4, the output 28 of the one-shot 16 from Figure 1 is shown connected to the input of each respective circuit.

The circuit of Figure 5 is shown connected between a terminal 24 of Figure 4 (Figure 1) and another terminal 24' which can be connected to the terminal 24 of Figure 2.

Wherever possible to keep power consumption low, since only the 4 mA of the 4 to 20 mA is available to operate a circuit, CMOS integrated circuits are used.

The one-shots are typically MC14538 units and the counter is typically a CD4024B. The amplifiers are typically OP20 units or LM108/308 units.

Elements such as the vortex sensor, preamplifier and threshold detector of Figure 1 are known in the art as off-the-shelf items.

**Claims**

1. A vortex shedding flowmeter circuit arrangement comprising:
a vortex sensor (10) for generating a vortex shedding frequency signal; pulse means (16) connected to the vortex sensor for generating a fixed width pulse signal with a frequency equal to the frequency of the vortex shedding frequency signal; a low pass filter (20) connected to the pulse means (16) for receiving the fixed width pulse signal and operative to generate an analog signal which is proportional in level to the frequency of the vortex shedding frequency signal; and

an output stage connected to the low pass filter (20) for receiving the analog signal, the output stage including an amplifier (OA₁) having a non-inverting input and an inverting input, and feedback means connected between the output of the amplifier (OA₁) and one of the inputs, the other input being connected to receive the analog signal;
characterised in that:

means (S_A) is provided to enable one of the fixed width pulse signal and the analog signal to be supplied selectively to the non-inverting input of the amplifier (OA₁);

a two wire transmission line is connected to be driven by the output of the output stage;

power supply means (26) is connected to the two wire transmission line; and

the feedback means is operative to adjust the amplifier output to equal the current sensed in the two wire transmission line.

2. A circuit arrangement according to claim 1, including a pulse signal network (22) connected to the pulse means (16) for receiving the fixed width pulse signal and setting a base level and amplitude for the fixed width pulse signal.

3. A circuit arrangement according to claim 2, including a scale selector connected to the pulse signal network (22) for receiving the fixed width pulse signal of controlled base level and amplitude and dividing the frequency of the fixed width pulse signal by $2^n$, where $n$ is an integer.

4. A circuit arrangement according to claim 3, wherein the scale selector comprises a counter (30) for counting the pulses in the fixed width pulse signal and dividing the frequency thereof by $2^n$, and a one-shot (32) for receiving an output from the counter (30).

**Patentansprüche**

1. Schaltungsanordnung für wirbelablösende Strömungsmesser mit einem Wirbelsensor (10) zur Erzeugung eines Wirbelablöse-Frequenzsignals; Impulsmitteln (16), die mit dem Wirbelsensor verbunden sind, für die Erzeugung eines Impulssignals fester Breite mit einer Frequenz gleich der Frequenz des Wirbelablöse-Frequenzsignals; einem Tiefpaßfilter (20), der mit den Impulsmitteln (16) verbunden ist, zur Aufnahme des Impulssignals fester Breite und zur Erzeugung eines Analogsignals, dessen Niveau proportional zur Frequenz des Wirbelablöse-Frequenzsignals ist; und mit einer Leistungsstufe, die mit dem Tiefpaßfilter (20) verbunden ist, zur Aufnahme des Analogsignals, wobei die Leistungsstufe einen Verstärker (OA₁), der einen nicht invertie-

renden Eingang und einen invertierenden Eingang hat, und Rückkopplungsmittel aufweist, die zwischen dem Ausgang des Verstärkers (OA₁) und einem der Eingänge verbunden sind, wobei der andere Eingang angeschlossen ist, um das Analogsignal aufzunehmen; dadurch gekennzeichnet, daß ein Mittel (S_A) vorgesehen ist, um das Impulssignal fester Breite oder das Analogsignal in die Lage zu versetzen, wahlweise dem nicht invertierenden Eingang des Verstärkers (OA₁) zugeführt zu werden; eine Zweidrahtübertragungsleitung angeschlossen ist, um vom Ausgang der Leistungsstufe angesteuert zu werden; ein Netzgerätmittel (26) an der Zweidrahtübertragungsleitung angeschlossen ist; und das Rückkopplungsmittel wirksam ist, um den Verstärkerausgang einzustellen, um den in der Zweidrahtübertragungsleitung abgefühlten Strom zu erreichen.

2. Schaltungsanordnung nach Anspruch 1 mit einem Impulssignalnetzwerk (22), welches mit dem Impulsmittel (16) verbunden ist, zur Aufnahme des Impulssignals mit fester Breite und Einstellen eines Grundniveaus und Amplitude für das Impulssignal fester Breite.

3. Schaltungsanordnung nach Anspruch 2 mit einem Meßbereichswahlschalter, der mit dem Impulssignalnetzwerk (22) verbunden ist, für die Aufnahme des Impulssignals fester Breite gesteuerten Grundniveaus und Amplitude und Teilen der Frequenz des Impulssignals fester Breite durch $2^n$, wobei n eine ganze Zahl ist.

4. Schaltungsanordnung nach Anspruch 3, wobei der Meßbereichswahlschalter einen Zähler (30) aufweist zum Zählen der Impulse des Impulssignals fester Breite und Teilen der Frequenz derselben durch $2^n$, und eine Einkreisschaltung (32) aufweist zur Aufnahme eines Ausgangs aus dem Zähler (30).

**Revendications**

1. Une structure de circuit de débitmètre à vortex comprenant: un détecteur de vortex (10) destiné à générer un signal de fréquence de décollement de vortex; des moyens de génération d'impulsions (16) connectés au détecteur de vortex pour générer un signal sous forme d'impulsions de largeur fixe, avec une fréquence égale à la fréquence du signal de fréquence de décollement de vortex; un filtre passe-bas (20) connecté aux moyens de génération d'impulsions (16) pour recevoir un signal sous forme d'impulsions de largeur fixe, et capable de générer un signal analogique dont le niveau est proportionnel à la fréquence du signal de fréquence de décollement de vortex; et un étage de sortie connecté au filtre passe-bas (20) pour recevoir le signal analogique, l'étage de sortie comprenant un amplificateur (OA₁) ayant une entrée non inverseuse et une entrée inverseuse, et des moyens de réaction connectés entre la sortie de l'amplificateur (OA₁) et l'une des entrées, tandis que l'autre entrée est connectée de façon à recevoir le signal analogique;

caractérisée en ce que:

il existe des moyens (S$_A$) destinés à permettre l'application sélective à l'entrée non inverseuse de l'amplificateur (OA$_1$) du signal sous forme d'impulsions de largeur fixe ou du signal analogique;

une ligne de transmission bifilaire est connectée de façon à être attaquée par le signal de sortie de l'étage de sortie;

des moyens d'alimentation (26) sont connectés à la ligne de transmission bifilaire; et

les moyens de réaction règlent le niveau de sortie de l'amplificateur de façon à le rendre égal au courant détecté dans la ligne de transmission bifilaire.

2. Une structure de circuit selon la revendication 1, comprenant un réseau de génération de signal sous forme d'impulsions (22) connecté aux moyens de génération d'impulsions (16) pour recevoir le signal sous forme d'impulsions de largeur fixe et pour établir un niveau de base et une amplitude pour le signal sous forme d'impulsions de largeur fixe.

3. Une structure de circuit selon la revendication 2, comprenant un sélecteur de plage connecté au réseau de génération de signal sous forme d'impulsions (22) pour recevoir le signal sous forme d'impulsions de largeur fixe ayant un niveau de base et une amplitude définis, et pour diviser par 2$^n$ le signal sous forme d'impulsions de largeur fixe, en désignant par $n$ un nombre entier.

4. Une structure de circuit selon la revendication 3, dans laquelle le sélecteur de plage comprend un compteur (30) destiné à compter les impulsions dans le signal sous forme d'impulsions de largeur fixe, et à diviser leur fréquence par 2$^n$, et un circuit monostable (32) destiné à recevoir un signal de sortie du compteur (30).

## FIG. 1

## FIG. 2

## FIG. 3

## FIG. 4

## FIG. 5